(19) Europäisches Patentamt
European Patent Office
Office européen des brevets

(11) **EP 4 675 501 A1**

(12) **EUROPEAN PATENT APPLICATION**
published in accordance with Art. 153(4) EPC

(43) Date of publication:
**07.01.2026 Bulletin 2026/02**

(21) Application number: **24852163.5**

(22) Date of filing: **30.07.2024**

(51) International Patent Classification (IPC):
**G06N 3/0464** (2023.01)     **G06N 3/045** (2023.01)
**G06N 3/063** (2023.01)     **G06T 3/4053** (2024.01)
**G06T 3/4046** (2024.01)     **G06F 17/15** (2006.01)
**G09G 5/391** (2006.01)     **G09G 5/00** (2006.01)

(52) Cooperative Patent Classification (CPC):
**G06F 17/15; G06N 3/045; G06N 3/0464;
G06N 3/063; G06T 3/4046; G06T 3/4053;
G09G 5/00; G09G 5/391**

(86) International application number:
**PCT/KR2024/011094**

(87) International publication number:
**WO 2025/033807 (13.02.2025 Gazette 2025/07)**

(84) Designated Contracting States:
**AL AT BE BG CH CY CZ DE DK EE ES FI FR GB
GR HR HU IE IS IT LI LT LU MC ME MK MT NL
NO PL PT RO RS SE SI SK SM TR**
Designated Extension States:
**BA**
Designated Validation States:
**GE KH MA MD TN**

(30) Priority: **10.08.2023 KR 20230105148**

(71) Applicant: **Samsung Electronics Co., Ltd.**
**Suwon-si, Gyeonggi-do 16677 (KR)**

(72) Inventors:
• **HAN, Sunbum**
**Suwon-si, Gyeonggi-do 16677 (KR)**
• **KIM, Haengkang**
**Suwon-si, Gyeonggi-do 16677 (KR)**
• **LIM, Daesung**
**Suwon-si, Gyeonggi-do 16677 (KR)**

(74) Representative: **Appleyard Lees IP LLP**
**15 Clare Road**
**Halifax HX1 2HY (GB)**

(54) **DISPLAY APPARATUS AND OPERATION METHOD THEREOF**

(57)     A method of performing a convolution operation is provided. The method includes obtaining a lightweight convolutional neural network with a reduced bit width of weights, and inputting input data to the convolutional neural network and performing neural network computations to obtain output data. The neural network computations includes determining a shift distance based on a value of input feature data, performing a shift operation to reduce a bit width of the input feature data based on the shift distance, performing a convolution operation on the input feature data with the reduced bit width and the weights with the reduced bit width, wherein the convolution operation includes a shift operation of restoring the bit width, and obtaining output feature data with the restored bit width.

FIG. 1

**Description**

Technical Field

The present disclosure relates to a display device that processes images and videos by using a deep neural network and an operating method of the display device.

Background Art

Recently, with the development of technologies, display devices that provide 8K resolution screens have been provided. However, because the majority of content on the market is produced in 4K resolution, technology to improve image quality by using artificial intelligence is being used to fully utilize 8K resolution screens of display devices. Due to the features of artificial intelligence models, not only a large number of multipliers are required to process videos by using artificial intelligence in display devices, but also memories and registers are required to process artificial intelligence models, resulting in an increase in hardware size. However, when the hardware size increases, high costs occur in manufacturing display devices and power consumption also increases. Therefore, there is a need for a technology that is capable of reducing a hardware size while performing neural network computations by using artificial intelligence in display devices.

Disclosure of Invention

Solution to Problem

According to an aspect of the disclosure, a method, performed by a display device, of performing a convolution operation may be provided. The method may include obtaining a lightweight convolutional neural network with a reduced bit width of weights. The method may include inputting input data to the convolutional neural network and performing neural network computations to obtain output data. The neural network computations may include determining a shift distance based on a value of input feature data, performing a shift operation to reduce a bit width of the input feature data based on the shift distance, performing a convolution operation on the input feature data with the reduced bit width and the weights with the reduced bit width, and obtaining output feature data with the restored bit width. The convolution operation may include a shift operation of restoring the bit width.

According to an aspect of the disclosure, a display device for performing a convolution operation may be provided. The display device may include a communication interface, memory storing one or more instructions, and at least one processor configured to execute the one or more instructions stored in the memory. The at least one processor may be configured to execute the one or more instructions to obtain a lightweight convolutional neural network with a reduced bit width of weights. The at least one processor may be configured to execute the one or more instructions to input input data to the convolutional neural network and perform neural network computations to obtain output data. The neural network computations may include determining a shift distance based on a value of input feature data, performing a shift operation to reduce a bit width of the input feature data based on the shift distance, performing a convolution operation of the input feature data with the reduced bit width and the weights with the reduced bit width, and obtaining output feature data with the restored bit width. The convolution operation may include a shift operation of restoring the bit width.

According to an aspect of the disclosure, a computer-readable recording medium having recorded thereon a program for causing a display device to perform one of the methods described above and described below may be provided.

Brief Description of Drawings

FIG. 1 is a diagram for schematically describing an operation of a display device according to an embodiment of the disclosure.
FIG. 2 is a diagram for describing an operation in which a display device performs high-resolution image processing, according to an embodiment of the disclosure.
FIG. 3 is a diagram for describing an operation in which a display device performs convolutional neural network computation, according to an embodiment of the disclosure.
FIG. 4 is a diagram for describing a hardware configuration for performing convolutional neural network computation in a display device, according to an embodiment of the disclosure.
FIG. 5A is a diagram for describing an operation in which a display device reduces a bit width, according to an embodiment of the disclosure.
FIG. 5B is a diagram for describing an operation in which a display device reduces a bit width, according to an embodiment of the disclosure.
FIG. 6A is a diagram for describing an operation in which a display device performs a dynamic shift operation, according to an embodiment of the disclosure.
FIG. 6B is a diagram for describing an operation in which a display device performs a convolution operation, according to an embodiment of the disclosure.
FIG. 7A is a diagram for describing an operation in which a display device uses a plurality of convolutional neural networks, according to an embodiment of the disclosure.

FIG. 7B is a diagram for describing an operation in which a display device uses a plurality of convolutional neural networks, according to an embodiment of the disclosure.

FIG. 8A is a diagram for describing an operation in which a display device processes pixel data, according to an embodiment of the disclosure.

FIG. 8B is a diagram for describing an operation in which a display device processes pixel data, according to an embodiment of the disclosure.

FIG. 9A is a diagram for describing an example in which a display device reduces a bit width of a weight, according to an embodiment of the disclosure.

FIG. 9B is a diagram for describing an example in which a display device reduces a bit width of feature data, according to an embodiment of the disclosure.

FIG. 9C is a diagram for describing an example in which a display device reduces a bit width of a weight combination, according to an embodiment of the disclosure.

FIG. 10 is a block diagram illustrating a configuration of a display device according to an embodiment of the disclosure.

FIG. 11 is a block diagram illustrating a configuration of a display device according to an embodiment of the disclosure.

Mode for the Invention

Throughout the disclosure, the expression "at least one of a, b or c" indicates only a, only b, only c, both a and b, both a and c, both b and c, all of a, b, and c, or variations thereof.

As for the terms as used in the disclosure, common terms that are currently widely used are selected as much as possible while taking into account the functions in the disclosure. However, the terms may vary depending on the intention of those of ordinary skill in the art, precedents, the emergence of new technology, and the like. Also, in a particular case, there are also terms arbitrarily selected by the applicant. In this case, the meaning of the terms will be described in detail in the description of the disclosure. Therefore, the terms as used herein should be defined based on the meaning of the terms and the description throughout the disclosure rather than simply the names of the terms.

The singular forms as used herein are intended to include the plural forms as well unless the context clearly indicates otherwise. All terms including technical or scientific terms as used herein have the same meaning as commonly understood by those of ordinary skill in the art. It will be understood that although the terms "first," "second," etc. may be used to describe various elements, these elements should not be limited by these terms. These terms are only used to distinguish one element from another.

Throughout the specification, the expression "a portion includes a certain element" means that the portion further includes other elements rather than excludes other elements unless otherwise stated. Also, the terms such as "...er/or" and "module" described in the specification mean units that process at least one function or operation, and may be implemented as hardware, software, or a combination of hardware and software.

Hereinafter, an embodiment of the disclosure will be described in detail with reference to the accompanying drawings, so that those of ordinary skill in the art may easily carry out the disclosure. However, the disclosure may be implemented in various different forms and is not limited to the embodiments of the disclosure described herein. In order to clearly explain the disclosure, parts irrelevant to the description are omitted in the drawings, and similar reference numerals are assigned to similar parts throughout the specification. Also, reference numerals used in the drawings are only for describing the drawings, and different reference numerals used in different drawings do not indicate different elements. Hereinafter, the disclosure is described in detail with reference to the accompanying drawings.

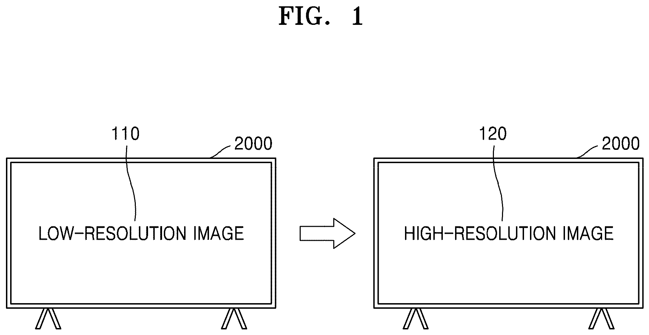

FIG. 1 is a diagram schematically illustrating an operation of a display device according to an embodiment of the disclosure.

Referring to FIG. 1, the display device 2000 may be a device that restores a low-resolution image 110 (or video) into a high-resolution image 120 and then outputs the high-resolution image 120. Examples of the display device 2000 may include a smart television (TV), a smartphone, a tablet personal computer (PC), a laptop PC, a frame-type display, etc., but the disclosure is not limited thereto. The display device 2000 may be implemented in various types and shapes including a display. In addition, the display device 2000 may include a speaker configured to output audio.

The display device 2000 may use artificial intelligence to restore the low-resolution image 110 into the high-resolution image 120. For example, the display device 2000 may use a convolutional neural network for super-resolution that receives the low-resolution image 110 and restores the low-resolution image 110 into the high-resolution image 120, but the disclosure is not limited thereto.

In an embodiment of the disclosure, the display device 2000 may perform neural network computation by using a convolutional neural network. In the disclosure, the neural network computation includes a series of operations of obtaining output data by applying input data to a neural network. For example, an element-wise multiplication operation and a cumulative sum operation for a convolution operation may be included, but the disclosure is not limited thereto.

When performing a neural network computation, the display device 2000 may reduce a bit width of data, and thus, reduce the number of bits to be input to a multiplier. That is, when performing a neural network computation, the display device 2000 may reduce a bit width of original data, perform a certain operation by using the data with the reduced bit width, and then restore the reduced bit width. For example, the display device 2000 may reduce a bit width of a weight included in a convolutional neural network and may reduce a bit width of feature data obtained during a neural network computation process.

In the disclosure, the data with the reduced bit width may be referred to as short-bit data. For example, a weight with a reduced bit width may be referred to as a short-bit weight, and feature data with a reduced bit width may be referred to as short-bit feature data.

In an embodiment of the disclosure, the display device 2000 may perform a right shift operation when reducing the bit width of data. In this case, the display device 2000 may dynamically determine a shift distance indicating the degree to which the bit width is reduced. That is, the display device 2000 may reduce the bit width of data through a dynamic shift operation.

The display device 2000 may reduce the bit width of data through the dynamic shift operation and restore the bit width of data while performing the convolution operation, thereby reducing hardware requirements (e.g., memory capacity, etc.) required for neural network computation. In addition, by lowering hardware requirements for neural network computation of the display device 2000, power consumed during neural network computation may be reduced.

Specific operations in which the display device 2000 performs the neural network computation by applying the dynamic shift operation are described in more detail in the drawings and descriptions thereof.

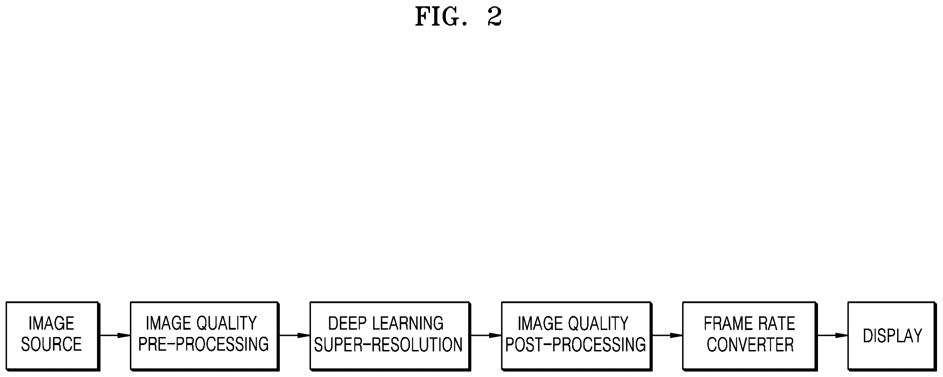

FIG. 2 is a diagram for describing an operation in which the display device 2000 performs high-resolution image processing, according to an embodiment of the disclosure.

In an embodiment of the disclosure, the display device 2000 may perform image quality pre-processing on an image source. For example, the display device 2000 may perform pre-processing, such as image resizing, edge enhancement, sharpening, or noise cancellation, on the image source so that the convolutional neural network model for super-resolution may output high-definition images more accurately.

The display device 2000 may convert a low-resolution input image into a high-resolution output image by using a deep learning super-resolution model. The super-resolution model may be a model implemented based on a convolutional neural network. The super-resolution model may be implemented by using various known deep neural network architectures and algorithms, or may be implemented through variations of various known deep neural network architectures and algorithms. For example, the convolutional neural network may be implemented through a super-resolution convolutional neural network (SRCNN), an enhanced deep super-resolution (EDSR), a super-resolution generative adversarial network (SRGAN), and variations thereof, but the disclosure is not limited to the examples described above.

The display device 2000 may perform image quality post-processing so as to improve output data of the super-resolution model. For example, the display device 2000 may perform post-processing, such as color correction, noise cancellation, or image quality correction.

The display device 2000 may adjust a frame rate of a video by using a frame rate converter. The frame rate converter adjusts the frame rate of the video including image frames corrected to high resolution, thereby generating a final high-definition video. When the generation of the high-definition video is completed, the display device 2000 may display the generated high-definition video.

When performing the high-resolution image processing operations described above, the display device 2000 of the disclosure may perform a dynamic shift operation and an inverse dynamic shift operation to reduce the size of hardware used for operation and reduce power consumption. This is described in more detail in the drawings and descriptions thereof.

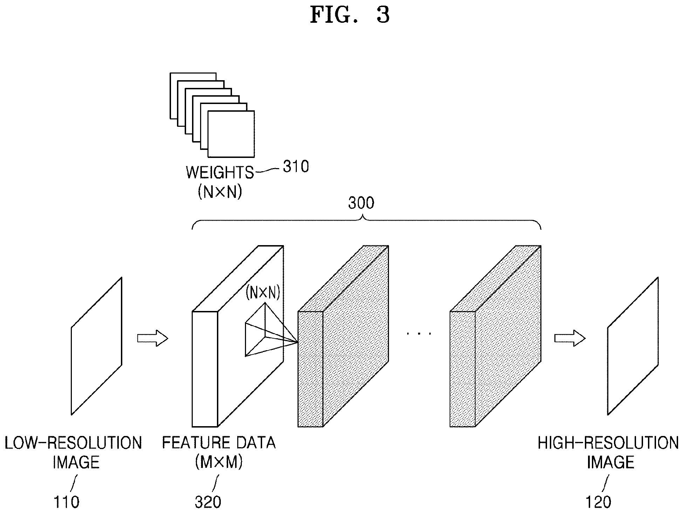

FIG. 3 is a diagram for describing an operation in which the display device performs convolutional neural network computation, according to an embodiment of the disclosure.

Referring to FIG. 3, the display device 2000 may perform a predefined task by using a convolutional neural network 300. The predefined task may be, for example, super-resolution that receives the low-resolution image 110 and restores the low-resolution image 110 into the high-resolution image 120, but the disclosure is not limited thereto.

The convolutional neural network 300 for super-resolution may be used to extract various features from the input low-resolution image 110, infer pixel information, and perform image upscaling. The convolutional neural network 300 may be an artificial intelligence model trained by using a dataset including low-resolution/high-resolution image pairs. The convolutional neural network 300 may be implemented by using various known deep neural network architectures and algorithms suitable for super-resolution, or may be implemented through variations of various known deep neural network architectures and algorithms. For example, the convolutional neural network may be implemented through an SRCNN, an EDSR, an SRGAN, and variations thereof, but the disclosure is not limited to the examples described above.

In an embodiment of the disclosure, the display device 2000 may perform neural network computation by using the convolutional neural network 300. The neural network computation may include a series of operations of calculating an output value by using weights 310 and feature data 320. The convolutional neural network 300 may include a plurality of neural network layers (e.g., convolutional layers). Taking one of the neural network layers of the convolutional neural network 300 as an example, the neural network computation may include performing a convolution operation on the feature data 320 output from the previous neural network layer and the weights 310 included in the convolutional layer, adding a bias value, and calculating an output value by using an activation function. In addition, the output value is another feature data and may be fed to a next neural network layer.

In the disclosure, the neural network computation may include a dynamic shift operation. The dynamic shift operation refers to dynamically determining a shift distance for reducing a bit width of data, based on a data value. The bit widths of the weights 310 and the feature data 320 may be reduced through the dynamic shift operation. The reduced bit width may be restored before the calculated output value is fed to the next layer. For example, the reduced bit width may be restored after performing the convolution operation and before adding the bias value, but the disclosure is not limited thereto.

The display device 2000 may reduce the bit width of data through the dynamic shift operation when performing the neural network computation and may restore the bit width of data while performing the convolution operation, thereby reducing hardware requirements (e.g., memory capacity, etc.) required for neural network computation. In addition, by lowering hardware requirements for neural network computation of the display device 2000, power consumed during neural network computation may be reduced.

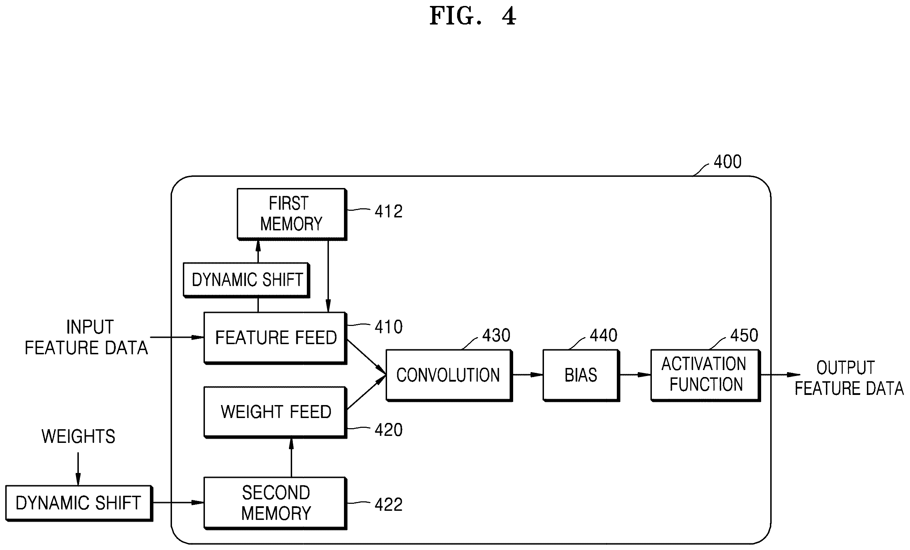

FIG. 4 is a diagram for describing a hardware configuration for performing convolutional neural network computation in the display device 2000, according to an embodiment of the disclosure.

Referring to FIG. 4, a hardware block 400 representing neural network computation of one layer of a convolutional neural network is illustrated as an example. Each block included in the hardware block 400 may include components (e.g., a control unit, memory, an arithmetic logic unit (ALU), etc.) for performing at least part of the neural network computation in each block. Because known components may be appropriately applied to each block included in the hardware block 400 according to the function thereof, a description of specific components of each block is omitted. In addition, the following description is given on the assumption that the convolutional neural network has been trained in advance.

In an embodiment of the disclosure, the display device 2000 may reduce the bit width by performing the dynamic shift operation on input feature data.

A feature feed block 410 may feed input feature data, which is a result value calculated in a previous layer, to a convolution block 430. In this case, the hardware block 400 may reduce the bit width of the input feature data by performing the dynamic shift operation before the feature feed block 410 feeds the input feature data to the convolution block 430, and the reduced bit width may be stored in a first memory 412 inside the hardware block 400. The feature feed block 410 may read short-bit input feature data stored in the first memory 412 and may feed the short-bit input feature data to the convolution block 430.

In an embodiment of the disclosure, the display device 2000 may make the convolutional neural network lightweight by reducing the bit widths of the weights of the trained convolutional neural network before performing neural network computation.

A weight feed block 420 may feed, to the convolution block 430, the weights to be applied to the input feature data. In this case, the bit widths of the weights may be reduced by performing the dynamic shift operation in advance on the weights, and the reduced bit widths of the weights may be stored in memory outside the hardware block 400. The hardware block 400 may receive short-bit weights and may store the short-bit weights in a second memory 422 inside the hardware block 400. In this case, an inter-integrated circuit (I2C) interface, an open core protocol (OCP) interface, etc. may be used, but the disclosure is not limited thereto. The weight feed block 420 may read the short-bit weights stored in the second memory 422 and may feed the short-bit weights to the convolution block 430.

Meanwhile, the first memory 412 and the second memory 422 in the hardware block 400 may be physically separated memories, or may be one logically separated memory.

The convolution block 430 may perform a convolution operation on the input feature data and the weights. In this case, the input feature data may have a reduced bit width, and the weights may also have a reduced bit width. In an embodiment of the disclosure, the convolution operation that is performed by the convolution block 430 may include a shift operation of restoring the bit width. For example, the convolution block 430 may perform an element-wise multiplication operation on the short-bit input feature data and the short-bit weights, may restore the reduced bit width, and then, may sum the element-wise multiplication results.

A bias block 440 may adjust an input for an activation function block 450 by adding a bias to the value calculated by the convolution block 430.

The activation function block 450 may calculate an output value by applying an activation function to an input value from the bias block 440. For example, the activation function may be rectified linear unit (ReLU), sigmoid, etc., but the disclosure is not limited thereto.

In an embodiment of the disclosure, the convolutional neural network may include a plurality of neural network layers. In this case, the neural network computations including bit width reduction and restoration may respectively correspond to the neural network layers. Specifically, as described above, when the hardware block 400 performs neural network computation of one layer of the convolutional neural network, output feature data that is the result of processing the input feature data may be obtained. The obtained output feature data may be fed to the next layer as the input feature data. The next layer may receive the input feature data and perform the neural network computation, including bit width reduction and restoration, in the same manner.

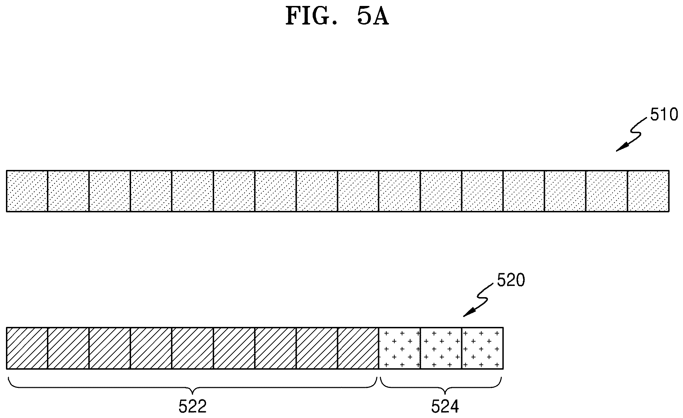

FIG. 5A is a diagram for describing an operation in which the display device 2000 reduces a bit width, according to an embodiment of the disclosure.

In an embodiment of the disclosure, the display device 2000 may obtain short-bit data 520 with a reduced bit width by performing a dynamic shift operation on original bit data 510. The bit data may be weights of a convolutional neural network or may be feature data obtained during a neural network computation process. For example, when the original bit data 510 is a weight, the short-bit data 520 obtained as the result of the display device 2000 performing the dynamic shift operation may be referred to as a short-bit weight. Alternatively, when the original bit data 510 is feature data, the short-bit data 520 obtained as the result of the display device 2000 performing the dynamic shift operation may be referred to as short-bit feature data. Hereinafter, for convenience of explanation, the weight and the feature data will be referred to as bit data without distinction.

In an embodiment of the disclosure, the short-bit data 520 may include information bits 522 and shift bits 524. The information bits 522 represent bits with a bit width reduced from the original bit data 510, and the shift bits 524 represent shift distance information.

In an embodiment of the disclosure, the display device 2000 may identify a bit width N of the original bit data 510. The display device 2000 may determine a bit width $N_I$ of the information bits 522 (where $N_I<N$) and a bit width Ns of the shift bits 524.

The display device 2000 may determines a unit step S of a shift distance, based on the bit width N of the original bit data 510, the bit width $N_I$ of the information bits 522, and the bit width Ns of the shift bits 524. The unit of the shift distance means that the shift distance in the dynamic shift operation is a multiple of S (e.g., S, 2S, 3S, ...).

The unit step S of the shift distance may be calculated as in Equation 1 below.

[Equation 1]

$$S = \frac{(N-1)-(N_I-1)}{2^{N_S}-1} = \frac{N-N_I}{2^{N_S}-1}$$

The display device 2000 may determine the bit width $N_I$ of the information bits 522 and the bit width Ns of the shift bits 524 so that the unit step S of the shift distance is an integer.

When the display device 2000 determines the unit step S of the shift distance, the display device 2000 may obtain the short-bit data 520 by reducing the bit width of the original bit data 510. At this time, the shift distance for reducing the bit width may be determined based on the unit step S and the value of the original bit data 510.

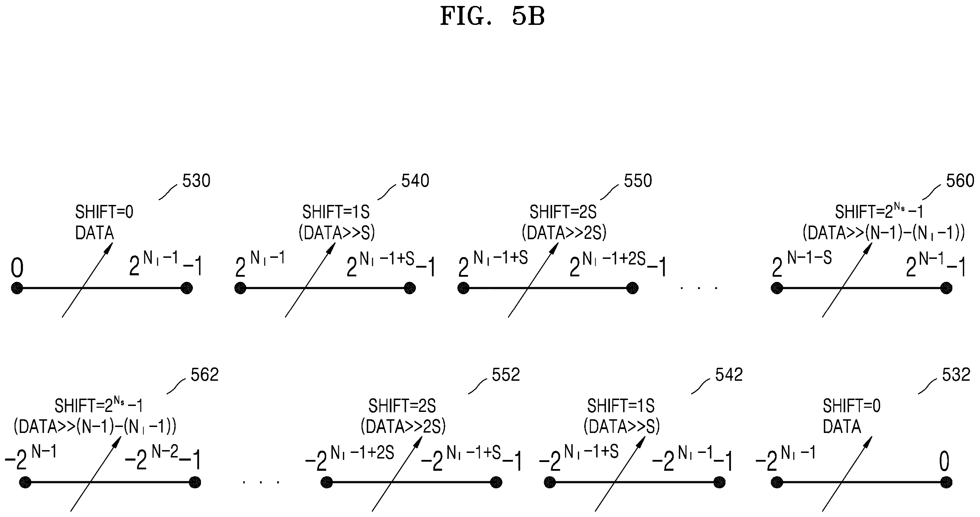

An operation in which the display device 2000 reduces the bit width is further described with reference to FIG. 5B.

FIG. 5B is a diagram for describing an operation in which the display device 2000 reduces the bit width, according to an embodiment of the disclosure.

In an embodiment of the disclosure, the display device 2000 may dynamically determine a shift distance based on a value of bit data and perform a dynamic shift operation of shifting bits by the determined shift distance.

In an embodiment of the disclosure, the display device 2000 may determine the shift distance based on whether original bit data includes sign information.

As described above, the unit step S of the shift distance may be determined by Equation 1 in FIG. 5A. The display device 2000 may determine the shift distance based on the unit step S of the shift distance and the value of the original bit data.

For example, referring to FIG. 5B, when the value of the original bit data is referred to as "DATA," the shift distance and the shift bit value dynamically determined based on the value of the original data are as follows. When the original bit data is a signed bit, the sign bit is included, and thus, 1 is subtracted from an exponent value $N_I$ of 2 by taking the sign bit into consideration.

(1)When a condition 530 of $0 \le DATA \le 2^{N_I-1} - 1$ is satisfied or when a condition 532 of $-2^{N_I-1} \le DATA \le 0$ is satisfied, the shift distance is determined to be 0 (i.e., no shift) and the value 0 is stored in the shift bit as shift information.

(2)When a condition 540 of $2^{N_I-1} \le DATA \le 2^{N_I-1+S} - 1$ is satisfied or when a condition 542 of $-2^{N_I-1+S} \le DATA \le -2^{N_I-1} - 1$ is satisfied, the shift distance is determined to be S and the value S is stored in the shift bit as shift information.

(3)When a condition 550 of $2^{N_I-1+S} \le DATA \le 2^{N_I-1+2S} - 1$ is satisfied or when a condition 552 of $-2^{N_I-1+2S} \le DATA \le -2^{N_I-1+S} - 1$ is satisfied, the shift distance is determined to be 2S and the value 2S is stored in the shift bit as shift information.

(4)In such a manner, when a condition 560 of $2^{N-1-S} \le DATA \le 2^{N-1} - 1$ is satisfied or when a condition 562 of $-2^{N-1} \le DATA \le -2^{N-1-S} - 1$ is satisfied, the shift distance is determined to be (N-1)-($N_I$-1) and the value $N-N_I$ is stored in the shift bit as shift information.

The bit width of the original bit data is N and the bit width of the short-bit data obtained by reducing the bit width of the original bit data is $N_I+N_S$, wherein $N_I$ represents the bit width of the information bit and Ns represents the bit width of the shift bit.

Although not illustrated in FIG. 5B, a case where the original bit data is an unsigned bit is described as an example. When the value of the original bit data is referred to as "DATA," the shift distance and the shift bit value dynamically determined based on the value of the original data are as follows.

(1)When a condition of $0 \leq DATA \leq 2^{N_I} - 1$ is satisfied, the shift distance is determined to be 0 (i.e., no shift) and the value 0 is stored in the shift bit as shift information.

(2)When a condition of $2^{N_I} \leq DATA \leq 2^{N_I+S} - 1$ is satisfied, the shift distance is determined to be S and the value S is stored in the shift bit as shift information.

(3)When a condition of $2^{N_I+S} \leq DATA \leq 2^{N_I+2S} - 1$ is satisfied, the shift distance is determined to be 2S and the value 2S is stored in the shift bit as shift information.

(4)In such a manner, when a condition of $2^{N-S} \leq DATA \leq 2^{N} - 1$ is satisfied, the shift distance is determined to be $(N-1)-(N_I-1)$ and the value $N-N_I$ is stored in the shift bit as shift information.

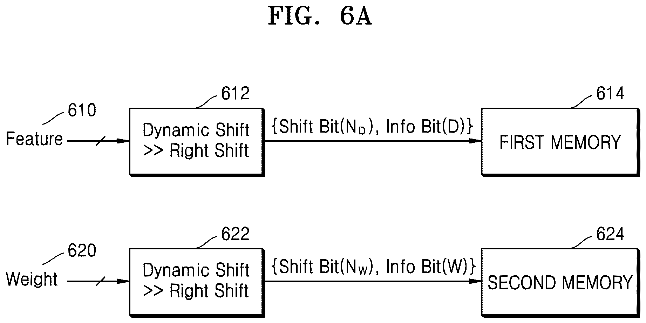

FIG. 6A is a diagram for describing an operation in which the display device performs a dynamic shift operation, according to an embodiment of the disclosure.

Referring to FIG. 6A, the display device 2000 may reduce a bit width of each of feature data 610 and a weight 620 by performing a dynamic shift operation on the feature data 610 and the weight 620.

In an embodiment of the disclosure, the display device 2000 may performs a dynamic shift operation 612 of reducing the bit width of the input feature data 610 in each layer of a convolutional neural network with respect to the input feature data 610 input to the layer. The dynamic shift operation 612 refers to dynamically determining the shift distance based on the value of the input feature data 610.

For example, the display device 2000 may identify a first bit width, which is the bit width of the input feature data 610.

Based on the first bit width, the display device 2000 may determine a second bit width, which is the bit width of shift bits representing shift information of the input feature data 610, and a third bit width, which is the bit width of information bits obtained by reducing the bit width of the input feature data 610.

In addition, the display device 2000 may determine the unit step S of the shift distance based on the first bit width, the second bit width, and the third bit width.

The display device 2000 may determine the values of the second bit width and the third bit width so that the unit step S is an integer. Because a specific operation in which the display device 2000 determines the unit step S of the shift distance, the second bit width, and the third bit width has been described above with reference to FIG. 5A, repeated descriptions thereof are omitted.

The display device 2000 may dynamically determine the shift distance for reducing the bit width of the input feature data 610, based on the unit step S and the value of the input feature data 610. Because the operation in which the display device 2000 determines the shift distance based on the unit step S and the value of the data has been described above with reference to FIG. 5B, repeated descriptions thereof are omitted.

The display device 2000 may perform the dynamic shift operation 612 (right shift) of reducing the bit width of the input feature data 610 based on the determined shift distance. The display device 2000 may store, in an information bit D, the value of the feature data remaining after the shift operation and may store, in a shift bit $N_D$, shift information indicating the shift distance. That is, the short-bit feature data include D and $N_D$.

The display device 2000 may store the input feature data 610 with the reduced bit width in a first memory 614. Because the operation in which the display device 2000 performs the dynamic shift operation 612 on the input feature data 610 and store the resulting input feature data 610 in the first memory 614 has been described above with reference to FIG. 4, repeated descriptions thereof are omitted.

Meanwhile, the values of the weights 620 are adjusted during a training process of a convolutional neural network, but the values of the weights 620 have static values after the completion of the convolution training. Therefore, before performing a task (e.g., high-resolution image restoration) by using the trained convolutional neural network, the display device 2000 may previously reduce the bit width of the weights 620 included in the convolutional neural network.

In an embodiment of the disclosure, the display device 2000 may obtain an original convolutional neural network that has been trained. The convolutional neural network may be received from an external device (e.g., a server, etc.) through a communication interface of the display device 2000 or may be stored in the memory of the display device 2000.

The display device 2000 may generate a lightweight convolutional neural network by reducing the bit width of the weights 620 of the original convolutional neural network. The operation in which the display device 2000 reduces the bit width of the weights 620 may be performed in the same manner as the operation of reducing the bit width of the feature data 610.

For example, based on the first bit width, which is the bit width of the weights 620, the display device 2000 may determine a second bit width, which is the bit width of shift bits representing shift information of the weights 620, and a third bit width, which is the bit width of information bits obtained by reducing the bit width of the weights 620. In addition, the display device 2000 may determine the unit step S of the shift distance based on the first bit width, the second bit width, and the third bit width.

The display device 2000 may dynamically determine the shift distance for reducing the bit width of the weights 620, based on the unit step S and the weights 620.

The display device 2000 may perform a dynamic shift operation 622 (right shift) of reducing the bit width of the weights 620 based on the determined shift distance. The display device 2000 may store, in an information bit W, the value of the weights remaining after the shift operation and may store, in a shift bit Nw, shift information indicating the shift distance. That is, the short-bit weight includes W and Nw.

In an embodiment of the disclosure, when the display device 2000 generates the lightweight convolutional neural network in advance before performing the task by using the convolutional neural network, the display device 2000 may store, in the memory, the lightweight neural network including the short-bit weights. When the display device 2000 performs the task by using the convolutional neural network, the display device 2000 may transmit short-bit weights to a second memory 624 included in the hardware block (400 of FIG. 4) that performs neural network computation by using the I2C interface, the OCP interface, etc.

When performing neural network computation, the display device 2000 according to an embodiment of the disclosure may reduce hardware requirements (e.g., memory capacity, etc.) required for neural network computation by reducing the bit width of the data through the dynamic shift operation and then restoring the bit width of the data while performing the convolution operation. In addition, by lowering hardware requirements for neural network computation of the display device 2000, power consumed during neural network computation may be reduced. In addition, the bit width of the weights of the convolutional neural network, which may be processed in advance before performing neural network computation, may be reduced in advance and prestored in the memory of the display device 2000. By calling the lightweight convolutional neural network when performing neural network computation, hardware resources required for neural network computation may be saved.

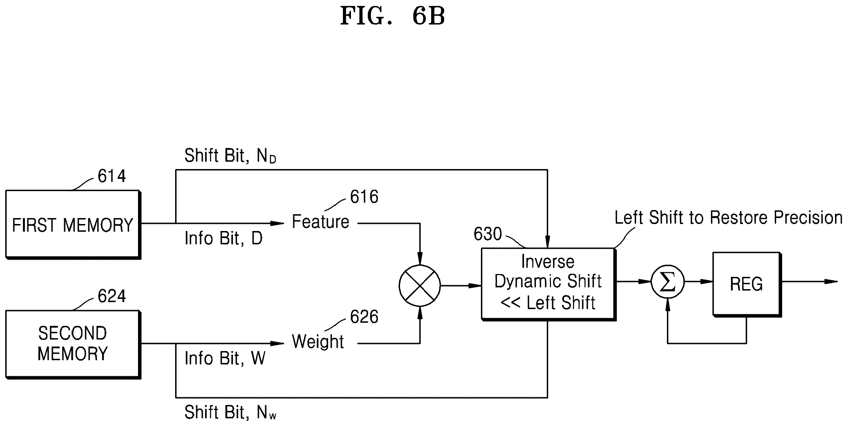

FIG. 6B is a diagram for describing an operation in which the display device 2000 performs a convolution operation, according to an embodiment of the disclosure.

As the result of the dynamic shift operation described above with reference to FIG. 6A, short-bit feature data 616 may be stored in the first memory 614, and short-bit weights 626 may be stored in the second memory 624. The short-bit feature data 616 may include information bits D and shift bits No. The short-bit weights 626 may include information bits W and shift bits Nw.

In an embodiment of the disclosure, the display device 2000 may perform a convolution operation. The convolution operation may include element-wise multiplication and summation operations for feature data and weights.

The display device 2000 may perform an element-wise multiplication operation by using the information bit D of the short-bit feature data 616 and the information bits W of the short-bit weights 626. In this case, the display device 2000 may perform an inverse dynamic shift operation 630 before summing the results of performing the element-wise multiplication operation. The display device 2000 may perform an inverse dynamic shift operation 630 (left shift) of restoring the bit width by using the shift bits ND of the short-bit input feature data 616 and the shift bits NW of the short-bit weights 626 and may sum and store the results of performing the element-wise multiplication operation.

The display device 2000 may save memory capacity by reducing the bit width of data and then storing the data in the memory. In addition, because the display device 2000 performs an operation by using the data with the reduced bit width, the number of bits input to a multiplier may be reduced. In addition, the display device 2000 may minimize loss of data precision in neural network computation by restoring the bit width by the reduced number of bits.

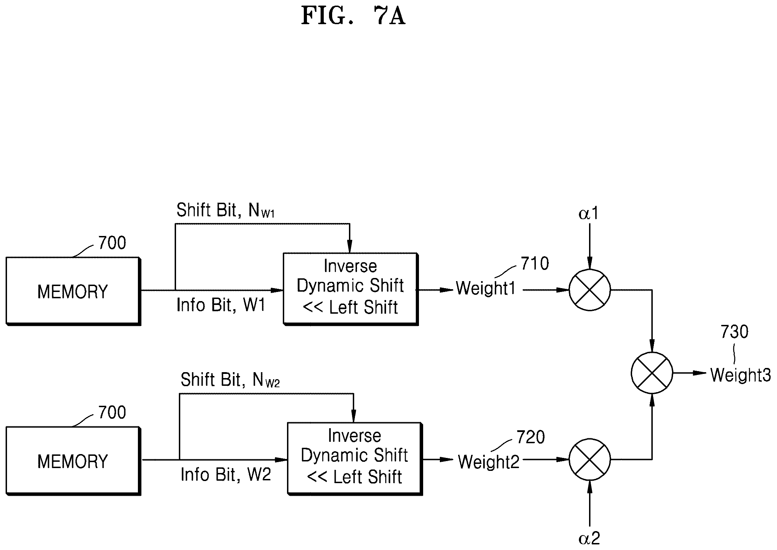

FIG. 7A is a diagram for describing an operation in which the display device 2000 uses a plurality of convolutional neural networks, according to an embodiment of the disclosure.

In an embodiment of the disclosure, the display device 2000 may obtain a plurality of lightweight convolutional neural networks. The lightweight convolutional neural networks may be generated by reducing the bit width of the weights of each of original convolutional neural networks. The convolutional neural network may be received from an external device (e.g., a server, etc.) through a communication interface of the display device 2000 or may be stored in the memory of the display device 2000.

The display device 2000 may use a plurality of lightweight convolutional neural networks. For example, when the display device 2000 restores a high-resolution image on a screen, different lightweight convolutional neural networks may be used for each region of the image. Specifically, the display device 2000 may perform image processing on a first region of the image by using a first lightweight convolutional neural network, and may perform image processing on a second region of the image by using a second lightweight convolutional neural network. Alternatively, the display device 2000 may perform image processing on a region of the image corresponding to an object by using the first lightweight convolutional neural network, and may perform image processing on a region of the image other than the object by using a second lightweight convolutional neural network. Meanwhile, the display device 2000 may use a combination of plurality of lightweight convolutional neural networks. For example, when the display device 2000 performs image processing on the first region of the image by using the first lightweight convolutional neural network and perform image processing on the second region of the image by using the second lightweight convolutional neural network, the display device 2000 may process a boundary region between the first region and the second region by using a combination of the first lightweight convolutional neural network and the second lightweight convolutional neural network. Alternatively, the display device 2000 may use a combination of the first lightweight convolutional neural network and the second lightweight convolutional neural network for a third region, which is a specific region within the image, based on a predefined criterion.

In an embodiment of the disclosure, the display device 2000 may obtain the first lightweight convolutional neural network from memory 700. The first lightweight convolutional neural network may include short-bit weights. The short-bit weights may include information bits and shift bits. The display device 2000 may restore the bit width by performing an inverse dynamic shift operation on the short-bit weights of the first lightweight convolutional neural network. As the result of the display device 2000 performing the inverse dynamic shift operation, a first weight 710 (a weight with a restored bit width) of the first lightweight convolutional neural network may be obtained. In the same manner, the display device 2000 may obtain a second weight 720 of the second lightweight convolutional neural network.

In an embodiment of the disclosure, the display device 2000 may multiply each weight by a combination coefficient so as to combine the first weight 710 of the first lightweight convolutional neural network and the second weight 720 of the second lightweight convolutional neural network. For example, the first weight 710 may be multiplied by a combination coefficient a1, and the second weight 720 may be multiplied by a combination coefficient a2. The display device 2000 may obtain a combined short-bit weight 730 by using the combination coefficient.

In an embodiment of the disclosure, the combination coefficient may be a value between 0 and 1, and the sum of the combination coefficients may be 1. The combination coefficient may be determined based on a predefined criterion. Continuing to describe the above-described example, when the display device 200 performs image processing on the first region of the image by using only the first lightweight convolutional neural network, the combination coefficient a1 may be defined as 1 and the combination coefficient a2 may be defined as 0. In addition, when the display device 200 performs image processing on the second region of the image by using the second lightweight convolutional neural network, the combination coefficient a1 may be defined as 0 and the combination coefficient a2 may be defined as 1. In addition, when using a combination of a plurality of lightweight convolutional neural networks in a specific region (e.g., a boundary region between the first region and the second region) in the image, the combination coefficient a1 may be defined as x (where x is a constant) and the combination coefficient a2 may be defined as y (where y is a constant).

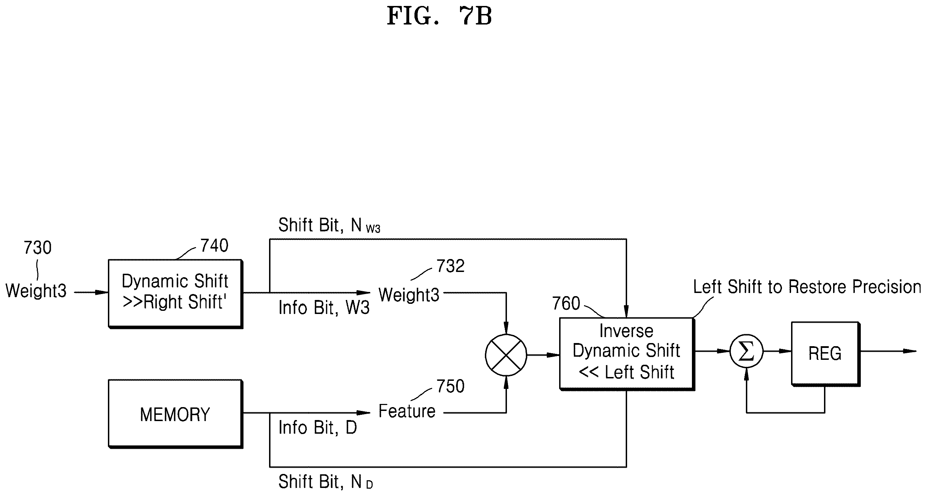

The display device 2000 may perform neural network computation including a convolution operation by using the combined weights. This is further described with reference to FIG. 7B.

FIG. 7B is a diagram for describing an operation in which the display device 2000 uses a plurality of convolutional neural networks, according to an embodiment of the disclosure.

In an embodiment of the disclosure, the display device 2000 may apply a dynamic shift operation 740 (right shift) of reducing the bit width of the combined short-bit weight 730. The display device 2000 may obtain the combined short-bit weight 730. The display device 2000 may store, in an information bit W3, the value of the feature data remaining after the shift operation and may store, in a shift bit $N_{W3}$, shift information indicating the shift distance. That is, the combined short-bit weight 730 includes W3 and $N_{W3}$. Because a specific operation in which the display device 2000 applies the dynamic shift operation 740 has been described above, repeated descriptions thereof are omitted.

In an embodiment of the disclosure, the display device 2000 may perform a convolution operation. The display device 2000 may perform an element-wise multiplication operation by using information bits D of feature data 750 with a reduced bit width and information bits W3 of combined short-bit weight 732. In this case, the display device 2000 may perform an inverse dynamic shift operation 760 before summing the results of performing the element-wise multiplication operation. The display device 2000 may perform the inverse dynamic shift operation 760, may sum the results of the element-wise multiplication operation, and store the resulting value.

In an embodiment of the disclosure, the combined short-bit weight 732 may be obtained by combining weights of a plurality of lightweight convolutional neural networks. That is, the display device 2000 may reduce the bit width of data when performing the convolution operation by using a combination of a plurality of lightweight convolutional neural networks, thereby reducing the size of hardware required for the operation and reducing power consumption. In addition, in the case of super-resolution used in the display device 2000, a large amount of data is processed, and thus, the size of the memory is large. Accordingly, the display device 2000 may efficiently use a plurality of convolutional neural networks by reducing the bit width of data.

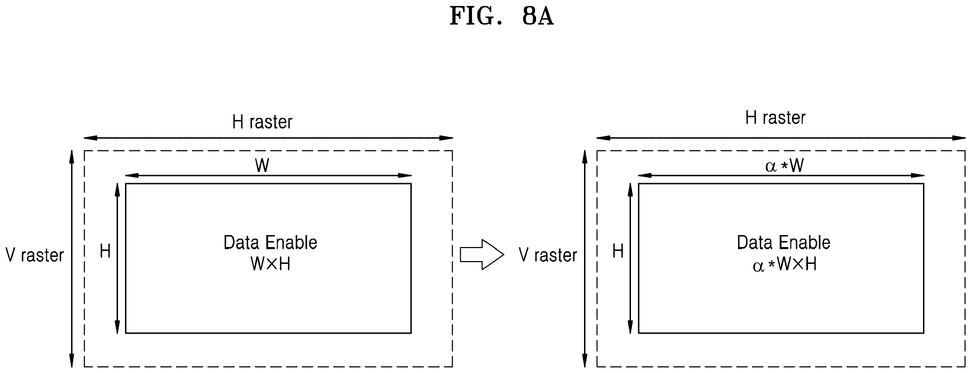

FIG. 8A is a diagram for describing an operation in which the display device 2000 processes pixel data, according to an embodiment of the disclosure.

In an embodiment of the disclosure, the display device 2000 may reduce the number of multipliers used for data processing by changing a method of processing pixel data, in addition to performing a dynamic shift operation to reduce the bit width when performing neural network computation. Accordingly, the display device 2000 may reduce the size of hardware required for operation and reduce power consumption.

In an embodiment of the disclosure, videos output by the display device 2000 may have defined standards. Specifically, a horizontal raster size and a vertical raster size of a video frame are defined, and a horizontal size and a vertical size of a data enable region that actual video data enters are defined in a region defined by the horizontal raster size and the vertical raster size.

The display device 2000 may identify the horizontal raster size and the vertical raster size of an image (a video frame). For example, when the display device 2000 processes 4K video, the identified horizontal raster size and the identified vertical raster size may be 4,400*2,250. At this time, a horizontal size W and a vertical size H of the data enable region may be 3,840*2,160.

The display device 2000 according to an embodiment of the disclosure may adjust the size of the data enable region, which is a region with valid pixel data, so as to reduce the number of multipliers consumed in video pixel data processing. For example, the display device 2000 may change the horizontal size of the data enable region from W to $\alpha$*W by applying an adjustment coefficient $\alpha$ to the data enable region. In this case, the display device 2000 may determine the size of the data enable region based on the multiplier specifications included in the display device 2000. In this case, the adjusted size of the data enable region is set to be less than the horizontal raster size and the vertical raster size. For example, the adjusted horizontal size $\alpha$*W of the data enable region does not exceed the horizontal raster size. As a result, the display device 2000 may process more valid pixel data within an original clock for processing pixels of the horizontal raster and the vertical raster, compared to an existing method.

In an embodiment of the disclosure, when outputting video on a screen, the display device 2000 may process data so that the video is output in an original video format. For example, when the video standard corresponding to the data enable region W*H is 3,840*2,160, even when the valid pixel data is processed as much as $\alpha$*W*H by adjusting the data enable region, the processed pixel data may be adjusted so that a final video output is output in the original W*H size of 3,840*2,160.

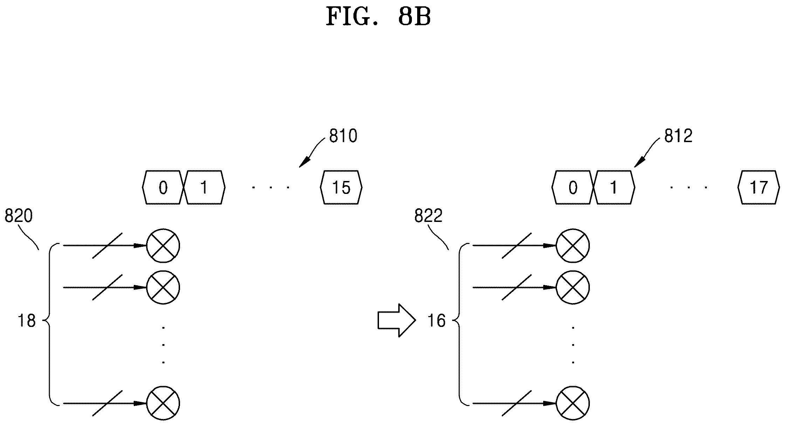

FIG. 8B is a diagram for describing an operation in which the display device 2000 processes pixel data, according to an embodiment of the disclosure.

In an embodiment of the disclosure, the display device 2000 may reduce the number of multipliers used in the display device 2000 by adjusting the size of the data enable region. For example, when the display device 2000 processes pixel data based on the horizontal size W of the original data enable region, the display device 2000 may process 288 pixel data by using 18 multipliers 820 for 16 clocks 810.

When the display device 2000 adjusts the size of the data enable region to $\alpha$*W as described above, the display device 2000 may determine an adjustment coefficient $\alpha$ for adjusting the size of the data enable region based on the multiplier specifications included in the display device 2000. For example, when the display device 2000 sets the adjustment coefficient $\alpha$ to 9/8, the display device 2000 may process 288 pixel data by using 16 multipliers 822 for 18 clocks 812. In this case, the clock used for data processing increases, but the horizontal size $\alpha$*W of the data enable region increased by using the adjustment coefficient is set to be within the horizontal raster size. Accordingly, pixel data may be processed within the clocks of one frame. As a result, because the number of multipliers required to process pixel data in the display device 2000 is reduced, the size of hardware included in the display device 2000 may be reduced and power consumption may be reduced.

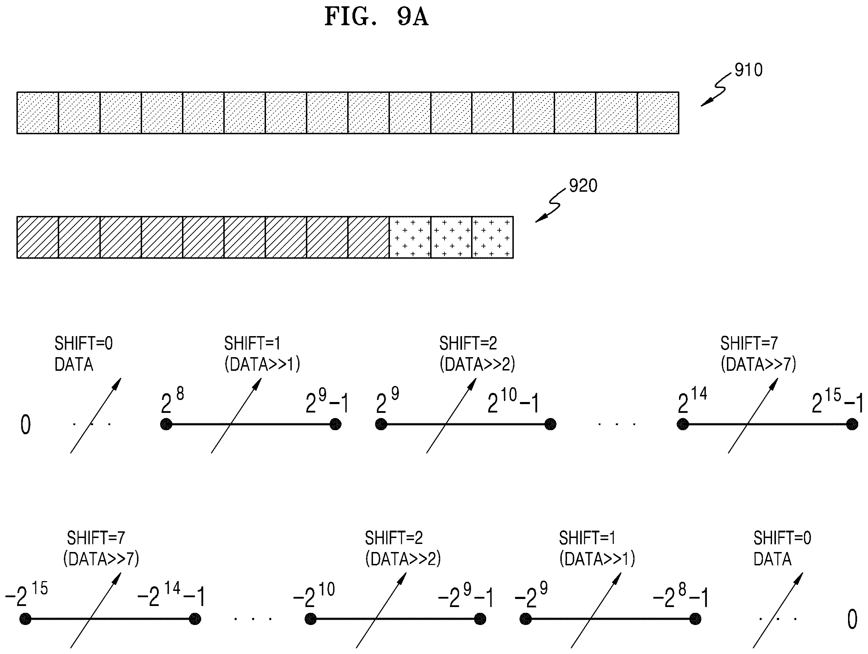

FIG. 9A is a diagram for describing an example in which the display device 2000 reduces a bit width of a weight, according to an embodiment of the disclosure.

In an embodiment of the disclosure, an original weight 910 of a convolutional neural network trained for image processing in the display device 2000 may be signed 16-bit data. In this case, the display device 2000 may obtain a short-bit weight 920 by dynamically reducing the bit width of the original weight 910. The short-bit weight 920 may include a total of 12 bits: 9 bits of information bits and 3 bits of shift bits. That is, the display device 2000 may reduce the bit width of the original weight 910 from 16 bits to 12 bits.

The display device 2000 may dynamically determine a shift distance based on the value of the original weight 910. An example of determining the shift distance is described below on the assumption that the bit width of the original weight 910 is determined as signed 16 bits, the information bits of the short-bit weight 920 are determined as 9 bits, the shift bits are determined as 3 bits, and the unit step of the shift distance is determined as 1.

(1) When a conditions of $0 \leq DATA \leq 2^8$ - 1 is satisfied or when a condition of $-2^8 \leq DATA \leq 0$ is satisfied, the shift distance is determined to be 0 (i.e., no shift) and the value 0 is stored in the shift bit as shift information.

(2) When a condition of $2^8 \leq DATA \leq 2^9$ - 1 is satisfied or when a condition of $-2^9 \leq DATA \leq -2^8$ - 1 is satisfied, the shift distance is determined to be 1 and the value 1 is stored in the shift bit as shift information.

(3) When a condition of $2^9 \leq DATA \leq 2^{10}$ - 1 is satisfied or when a condition of $-2^{10} \leq DATA \leq -2^9$ - 1 is satisfied, the shift distance is determined to be 2 and the value 2 is stored in the shift bit as shift information.

(4) In such a manner, when a condition of $2^{14} \leq DATA \leq 2^{15}$ - 1 is satisfied or when a condition of $-2^{15} \leq DATA \leq -2^{14}$ - 1 is satisfied, the shift distance is determined to be 7 and the value 7 is stored in the shift bit as shift information.

In the above example, N16, $N_I$=9, Ns=3, and S=1 are applied to the example described with reference to FIG. 5B.

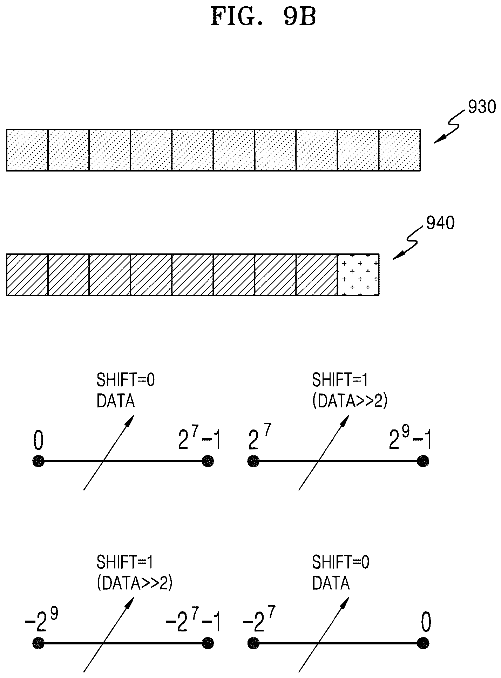

FIG. 9B is a diagram for describing an example in which the display device 2000 reduces a bit width of feature data, according to an embodiment of the disclosure.

In an embodiment of the disclosure, feature data 930 obtained during a neural network computation process of the display device 2000 may be signed 10-bit data. In this case, the display device 2000 may obtain short-bit feature data 940 by dynamically reducing the bit width of the feature data 930. The short-bit feature data 940 may include a total of 9 bits: 8 bits of information bits and 1 bit of a shift bit. That is, the display device 2000 may reduce the bit width of the feature data 930 from 10 bits to 9 bits.

The display device 2000 may dynamically determine a shift distance based on the value of the feature data 930. An example of determining the shift distance is described below on the assumption that the bit width of the feature data 930 is determined as signed 10 bits, the information bits of the short-bit feature data 940 are determined as 8 bits, the shift bits are determined as 1 bit, and the unit step of the shift distance is determined as 1.

(1)When a condition of $0 \leq DATA \leq 2^7 - 1$ is satisfied or when a condition of $-2^7 \leq DATA \leq 0$ is satisfied, the shift distance is determined to be 0 (i.e., no shift) and the value 0 is stored in the shift bit as shift information.
(2)When a condition of $2^7 \leq DATA \leq 2^9 - 1$ is satisfied or when a condition of $-2^9 \leq DATA \leq -2^7 - 1$ is satisfied, the shift distance is determined to be 2 and the value 2 is stored in the shift bit as shift information.

In the above example, N = 10, $N_I$=8, Ns=1, and S=2 are applied to the example described with reference to FIG. 5B.

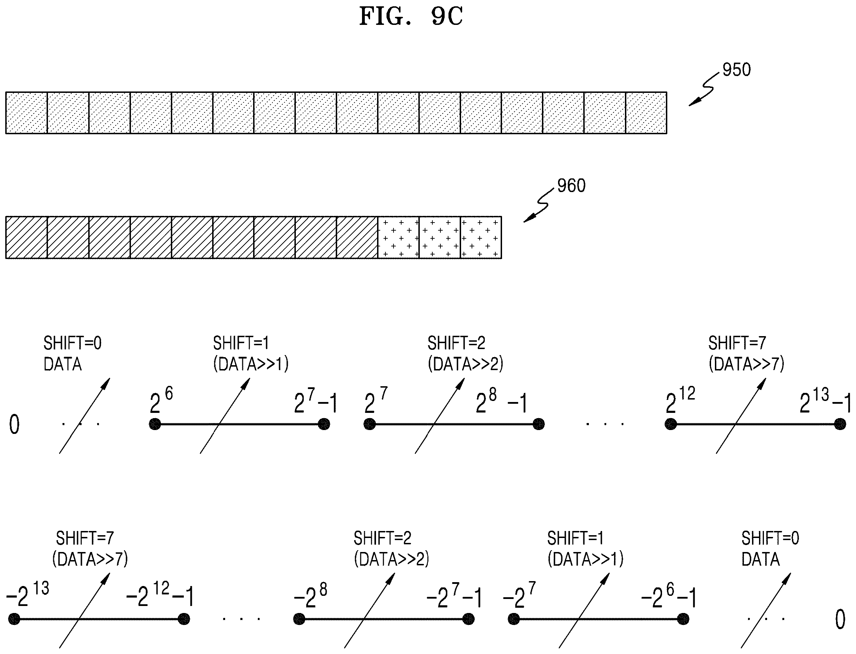

FIG. 9C is a diagram for describing an example in which the display device 2000 reduces a bit width of a weight combination, according to an embodiment of the disclosure.

In an embodiment of the disclosure, as described above with reference to FIGS. 7A and 7B, a combined weight 950 obtained when the display device 2000 combines the weights of a plurality of convolutional neural networks may be signed 14-bit data. In this case, the display device 2000 may obtain a short-bit combined weight 960 by dynamically reducing the bit width of the combined weight 950. The short-bit combined weight 960 may include a total of 10 bits: 7 bits of information bits and 3 bits of shift bits. That is, the display device 2000 may reduce the bit width of the combined weight 950 from 14 bits to 10 bits.

The display device 2000 may dynamically determine a shift distance based on the value of the combined weight 950. An example of determining the shift distance is described below on the assumption that the bit width of the combined weight 950 is determined as signed 14 bits, the information bits of the short-bit combined weight 960 are determined as 7 bits, the shift bits are determined as 3 bits, and the unit step of the shift distance is determined as 1.

(1)When a conditions of $0 \leq DATA \leq 2^6 - 1$ is satisfied or when a condition of $-2^6 \leq DATA \leq 0$ is satisfied, the shift distance is determined to be 0 (i.e., no shift) and the value 0 is stored in the shift bit as shift information.
(2)When a condition of $2^6 \leq DATA \leq 2^7 - 1$ is satisfied or when a condition of $-2^7 \leq DATA \leq -2^6 - 1$ is satisfied, the shift distance is determined to be 1 and the value 1 is stored in the shift bit as shift information.
(3)When a condition of $2^7 \leq DATA \leq 2^8 - 1$ is satisfied or when a condition of $-2^8 \leq DATA \leq -2^7 - 1$ is satisfied, the shift distance is determined to be 2 and the value 2 is stored in the shift bit as shift information.
(4)In such a manner, when a condition of $2^{12} \leq DATA \leq 2^{13} - 1$ is satisfied or when a condition of $-2^{13} \leq DATA \leq -2^{12} - 1$ is satisfied, the shift distance is determined to be 7 and the value 7 is stored in the shift bit as shift information.

In the above example, N14, $N_I$=7, Ns=3, and S=1 are applied to the example described with reference to FIG. 5B.

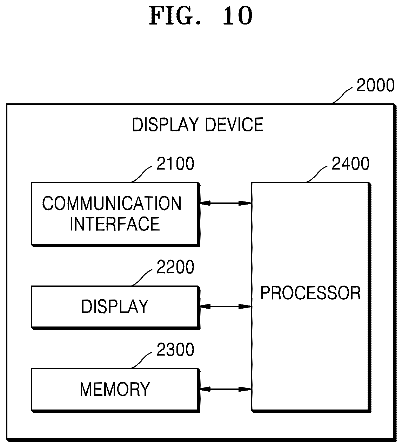

FIG. 10 is a block diagram illustrating the configuration of the display device 2000 according to an embodiment of the disclosure.

In an embodiment of the disclosure, the display device 2000 may include a communication interface 2100, a display 2200, memory 2300, and a processor 2400.

The communication interface 2100 may include communication circuitry. The communication interface 2100 may include communication circuitry that may perform data communication between the display device 2000 and other devices by using at least one of data communication schemes including, for example, wired local area network (LAN), wireless LAN, Wireless Fidelity (Wi-Fi), Bluetooth, ZigBee, Wi-Fi Direct (WFD), Infrared Data Association (IrDA), Bluetooth Low Energy (BLE), Near Field Communication (NFC), Wireless Broadband Internet (WiBro), World Interoperability for Microwave Access (WiMAX), Shared Wireless Access Protocol (SWAP), Wireless Gigabit Alliance (WiGig), or radio frequency (RF) communication.

The communication interface 2100 may transmit and receive data for performing the operation of the display device 2000 to and from an external electronic device. For example, the display device 2000 may transmit and receive various data, such as a convolutional neural network, an image source, or a video source, to and from an external electronic device (e.g., a server, etc.) through the communication interface 2100.

The display 2200 may output an image signal on a screen of the display device 2000 under the control of the processor 2400. For example, the display device 2000 may output a high-resolution video generated by using a convolutional neural network through the display 2200.

The memory 2300 may store instructions, a data structure, and program code, which are readable by the processor 2400. One or more memories 2300 may be provided. In an embodiment of the disclosure, operations that are performed by the processor 2400 may be implemented by executing instructions or codes of a program stored in the memory 2300.

The memory 2300 may include non-volatile memories, such as read-only memory (ROM) (e.g., programmable read-only memory (PROM), erasable programmable read-only memory (EPROM), or electrically erasable programmable read-only memory (EEPROM)), flash memory (e.g., memory card or solid-state drive (SSD)), and analog recording types (e.g., hard disk drive (HDD), and volatile memories, such as random-access memory (RAM) (e.g., dynamic random-access memory (DRAM) or static random-access memory (SRAM)).

The processor 2400 may control overall operations of the display device 2000. For example, the processor 2400 may control overall operations of generating a high-resolution video by executing one or more instructions of a program stored in the memory 2300. One or more processors 2400 may be provided.

The processor 2400 may perform the operations of the embodiments of the disclosure described above. For example, the processor 2400 may determine the shift distance for reducing the bit width of data and perform neural network computation including the reduction and restoration of the bit width. Because the specific operations of the processor 2400 are similar to the operations of the display device 2000 described with reference to the previous drawings, repeated descriptions thereof are omitted for brevity.

The at least one processor 2400 may include at least one of a central processing unit (CPU), a graphics processing unit (GPU), an accelerated processing unit (APU), a many integrated core (MIC), a digital signal processor (DSP), or a neural processing unit (NPU). The at least one processor 2400 may be implemented in the form of an integrated system-on-chip (SoC) including one or more electronic components. The at least one processor 2400 may each be implemented as separate hardware (H/W).

When the method according to an embodiment of the disclosure includes a plurality of operations, the operations may be performed by one processor 2400 or a plurality of processors 2400. For example, when a first operation, a second operation, and a third operation are performed by the method according to an embodiment of the disclosure, the first operation, the second operation, and the third operation may all be performed by a first processor. Alternatively, the first operation and the second operation may be performed by the first processor (e.g., a general-purpose processor) and the third operation may be performed by a second processor (e.g., a dedicated AI processor). A dedicated artificial intelligence processor, which is an example of the second processor, may perform operations for training and inference of an artificial intelligence model. However, the embodiments of the disclosure are not limited thereto.

The at least one processor 2400 according to the disclosure may be implemented as a single-core processor or may be implemented as a multi-core processor.

When the method according to an embodiment of the disclosure includes a plurality of operations, the operations may be performed by one core or may be performed by a plurality of cores included in the at least one processor 2400.

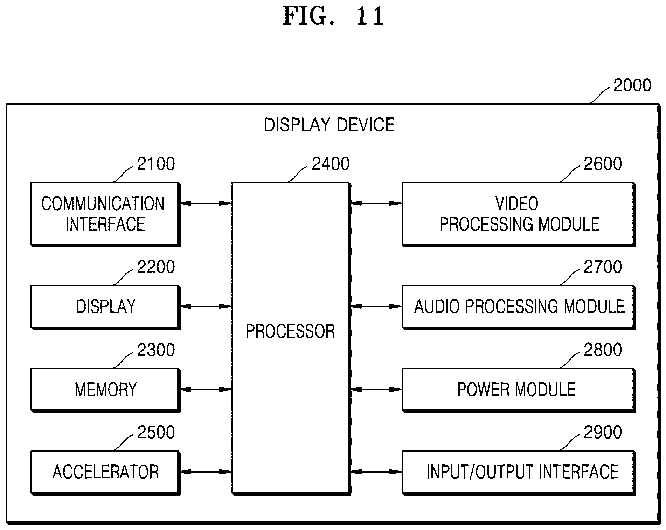

FIG. 11 is a block diagram illustrating the configuration of the display device 2000 according to an embodiment of the disclosure.

In an embodiment of the disclosure, the display device 2000 may include a communication interface 2100, a display 2200, memory 2300, a processor 2400, an accelerator 2500, a video processing module 2600, an audio processing module 2700, a power module 2800, and an input/output interface 2900.

Because the communication interface 2100, the display 2200, the memory 2300, and the processor 2400 of FIG. 11 respectively correspond to the communication interface 2100, the display 2200, the memory 2300, and the processor 2400 of FIG. 10, repeated descriptions thereof are omitted.

In an embodiment of the disclosure, the display device 2000 may include the accelerator 2500 configured to perform neural network computation. The accelerator 2500 may include hardware with a specialized structure for performing massive parallel processing of neural network computation. The accelerator 2500 may be implemented as, for example, a GPU, a tensor processing unit (TPU), an application-specific integrated circuit (ASIC), a field-programmable gate array (FPGA), etc., but the disclosure is limited thereto.

The video processing module 2600 may process video data to be reproduced by the display device 2000. The video processing module 2600 may perform a variety of image processing, such as decoding, scaling, noise filtering, frame rate conversion, or resolution conversion, on video data. The display 2200 may generate a driving signal by converting an image signal, a data signal, an on-screen display (OSD) signal, or a control signal, which is processed by the processor 2400, and may display an image according to the driving signal.

The audio processing module 2700 may perform processing on audio data. The audio processing module 2700 may perform various processes, such as decoding, amplification, or noise filtering, on audio data. Meanwhile, the audio processing module 2700 may include a plurality of audio processing units configured to process audio corresponding to a plurality of content.

The power module 2800 may supply, to components inside the display device 2000, power input from an external power source under the control of the processor 2400. In addition, the power module 2800 may supply, to components inside the display device 2000, power output from one or two batteries (not shown) located inside the display device 2000 under the control of the processor 2400.

The input/output interface 2900 may receive video (e.g., moving images, etc.), audio (e.g., voice, music, etc.), and additional information (e.g., electronic program guide (EPG), etc.) from the outside of the display device 1200. The input/output interface 2900 may include one of a high-definition multimedia interface (HDMI), a mobile high-definition link (MHL), a universal serial bus (USB), a display port (DP), a thunderbolt, a video graphics array (VGA) port, an RGB port, a D-subminiature (D-SUB), a digital visual interface (DVI), a component jack, and a PC port. The display device 2000 may be connected to one or more speakers through the input/output interface 2900.

The disclosure provides a display device that processes images and/or videos, and a method of reducing hardware requirements (e.g., memory capacity, etc.) when the display device performs neural network computation and processes images and/or videos. The technical objectives to be achieved by the disclosure are not limited to the technical objectives described above, and other technical objectives that are not mentioned herein will be clearly understood from the following description by those of ordinary skill in the art.

According to an aspect of the disclosure, a method, performed by a display device, of performing a convolution operation may be provided.

The method may include obtaining a lightweight convolutional neural network with a reduced bit width of weights.

The method may include inputting input data to the convolutional neural network and performing neural network computations to obtain output data.

The neural network computations may include determining a shift distance based on a value of input feature data, performing a shift operation to reduce a bit width of the input feature data based on the shift distance, performing a convolution operation on the input feature data with the reduced bit width and the weights with the reduced bit width, and obtaining output feature data with the restored bit width.

The convolution operation may include a shift operation of restoring the bit width.

The method may further include obtaining an original convolutional neural network, and generating the lightweight convolutional neural network by reducing a bit width of weights of the original convolutional neural network and storing the lightweight convolutional neural network in memory of the display device.

The obtaining of the lightweight convolutional neural network may include obtaining the lightweight convolutional neural network stored in the memory.

The weights with the reduced bit width and the input feature data with the reduced bit width may include information bits representing bits with a bit width reduced from original data and shift bits representing bits including shift distance information.

The determining of the shift distance may include identifying a first bit width, which is the bit width of the input feature data.

The determining of the shift distance may include determining a second bit width, which is the bit width of the shift bits.

The determining of the shift distance may include determining a third bit width, which is the bit width of the information bits.

The determining of the shift distance may include determining a shift distance based on values of the first bit width, the second bit width, the third bit width, and the input feature data.

The performing of the convolution operation may include performing an element-wise multiplication operation by using information bits of the input feature data with the reduced bit width and information bits of the weights with the reduced bit width.

The performing of the convolution operation may include performing a shift operation of restoring a bit width by using shift bits of the input feature data with the reduced bit width and shift bits of the weights with the reduced bit width.

The lightweight convolutional neural network may include a plurality of neural network layers.

The neural network computations including bit width reduction and restoration respectively correspond to the plurality of neural network layers.

The method may use a plurality of lightweight convolutional neural networks.

The performing of the neural network computations may include performing the neural network computations including the bit width reduction and restoration by using the plurality of lightweight convolutional neural networks.

The method may include combining weights with a reduced bit width of the plurality of lightweight convolutional neural networks based on a predefined criterion.

The performing of the neural network computations may include performing a convolution operation by using a combination of the weights with the reduced bit width of the plurality of lightweight convolutional neural networks.

The method may include identifying a horizontal raster size and a vertical raster size of a video frame.

The method may include adjusting a size of a data enable region, which is a region with valid pixel data, based on the horizontal raster size and the vertical raster size.

According to an aspect of the disclosure, a display device for performing a convolution operation may be provided. The display device may include a communication interface, memory storing one or more instructions, and at least one processor configured to execute the one or more instructions stored in the memory.

The at least one processor may be configured to execute the one or more instructions to obtain a lightweight convolutional neural network with a reduced bit width of weights.

The at least one processor may be configured to execute the one or more instructions to input input data to the convolutional neural network and perform neural network computations to obtain output data.

The neural network computations may include determining a shift distance based on a value of input feature data, performing a shift operation to reduce a bit width of the input feature data based on the shift distance, performing a convolution operation of the input feature data with the reduced bit width and the weights with the reduced bit width, and obtaining output feature data with the restored bit width.

The convolution operation may include a shift operation of restoring the bit width.

The at least one processor may be further configured to execute the one or more instructions to obtain an original convolutional neural network, and generate the lightweight convolutional neural network by reducing a bit width of weights of the original convolutional neural network and store the lightweight convolutional neural network in the memory.

The lightweight convolutional neural network may be configured to obtain the lightweight convolutional neural network stored in the memory.

The weights with the reduced bit width and the input feature data with the reduced bit width may include information bits representing bits with a bit width reduced from original data and shift bits representing bits including shift distance information.

The at least one processor may be further configured to execute the one or more instructions to identify a first bit width, which is the bit width of the input feature data.

The at least one processor may be further configured to execute the one or more instructions to determine a second bit width, which is the bit width of the shift bits.

The at least one processor may be further configured to execute the one or more instructions to determine a third bit width, which is the bit width of the information bits.

The at least one processor may be further configured to execute the one or more instructions to determine a shift distance based on values of the first bit width, the second bit width, the third bit width, and the input feature data.

The at least one processor may be further configured to execute the one or more instructions to perform an element-wise multiplication operation by using information bits of the input feature data with the reduced bit width and information bits of the weights with the reduced bit width.

The at least one processor may be further configured to execute the one or more instructions to perform a shift operation of restoring a bit width by using shift bits of the input feature data with the reduced bit width and shift bits of the weights with the reduced bit width.

The lightweight convolutional neural network may include a plurality of neural network layers.

The neural network computations including bit width reduction and restoration respectively correspond to the plurality of neural network layers.

The at least one processor may be further configured to execute the one or more instructions to perform the neural network computations including the bit width reduction and restoration by using the plurality of lightweight convolutional neural networks.

The at least one processor may be further configured to execute the one or more instructions to combine weights with a reduced bit width of the plurality of lightweight convolutional neural networks based on a predefined criterion.

The at least one processor may be further configured to execute the one or more instructions to perform a convolution operation by using a combination of the weights with the reduced bit width of the plurality of lightweight convolutional neural networks.

The at least one processor may be further configured to execute the one or more instructions to identify a horizontal raster size and a vertical raster size of a video frame.

The at least one processor may be further configured to execute the one or more instructions to adjust a size of a data enable region, which is a region with valid pixel data, based on the horizontal raster size and the vertical raster size.

Meanwhile, the embodiment of the disclosure may be implemented in the form of a computer-readable recording medium including computer-executable instructions, such as program modules executable by a computer. A computer-readable recording medium may be any available media that are accessible by the computer and may include any volatile and non-volatile media and any removable and non-removable media. In addition, the computer-readable recording medium may include a computer storage medium and a communication medium. The computer storage medium may include any volatile, non-volatile, removable, and non-removable media that are implemented in any method or technology for storage of information, such as computer-readable instructions, data structures, program modules, or other data. The communication medium may typically include computer-readable instructions, data structures, or other data of a modulated data signal, such as program modules.

Also, the computer-readable recording medium may be provided in the form of a non-transitory computer-readable recording medium. The "non-transitory storage medium" is a tangible device and only means not including a signal (e.g., electromagnetic waves). This term does not distinguish between a case where data is semi-permanently stored in a storage medium and a case where data is temporarily stored in a storage medium. For example, the non-transitory storage medium may include a buffer in which data is temporarily stored.

According to an embodiment of the disclosure, the methods according to various embodiments of the disclosure may be provided by being included in a computer program product. The computer program product may be traded between a seller and a buyer as commodities. The computer program product may be distributed in the form of a machine-readable storage medium (e.g., compact disc read-only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or memory of a relay server, or may be temporarily generated.

The foregoing description of the disclosure is for illustrative purposes only, and those of ordinary skill in the art to which the disclosure pertains will understand that modifications into other specific forms may be made thereto without changing the technical spirit or essential features of the disclosure. Therefore, it should be understood that the embodiments of the disclosure described above are illustrative in all aspects and are not restrictive. For example, the components described as being singular may be implemented in a distributed manner. Similarly, the components described as being distributed may be implemented in a combined form.

The scope of the disclosure is defined by the appended claims rather than the above detailed description, and all changes or modifications derived from the meaning and scope of the claims and equivalent concepts thereof should be construed as falling within the scope of the disclosure.

**Claims**

1. A method, performed by a display device, the method comprising:

   obtaining a lightweight convolutional neural network with a reduced bit width of weights; and
   inputting input data to the lightweight convolutional neural network and performing neural network computations to obtain output data,
   wherein the neural network computations comprise:

   determining a shift distance based on a value of input feature data;
   performing a shift operation to reduce a bit width of the input feature data based on the shift distance;

   performing a convolution operation on the input feature data with the reduced bit width and the weights with the reduced bit width, wherein the convolution operation comprises a shift operation of restoring the bit width; and
   obtaining output feature data with the restored bit width.

2. The method of claim 1, further comprising:

   obtaining an original convolutional neural network; and
   generating the lightweight convolutional neural network by reducing a bit width of weights of the original convolutional neural network and storing the lightweight convolutional neural network in a memory of the display device,
   wherein the obtaining of the lightweight convolutional neural network comprises obtaining the lightweight convolutional neural network from the memory.

3. The method of claim 1, wherein the weights with the reduced bit width and the input feature data with the reduced bit width comprise information bits representing bits with a bit width reduced from original data and shift bits representing bits including shift distance information.

4. The method of claim 3, wherein the determining of the shift distance comprises:

   identifying a first bit width, which is the bit width of the input feature data;
   determining a second bit width, which is the bit width of the shift bits;
   determining a third bit width, which is the bit width of the information bits; and
   determining a shift distance based on values of the first bit width, the second bit width, the third bit width, and the input feature data.

5. The method of any one of claims 1 to 4, wherein the lightweight convolutional neural network comprises a plurality of neural network layers, and the neural network computations including bit width reduction and restoration respectively correspond to the plurality of neural network layers.

6. The method of claim 5, wherein the method uses a plurality of lightweight convolutional neural networks, and the performing of the neural network computations comprises performing the neural network computations including the bit width reduction and restoration by using the plurality of lightweight convolutional neural networks.

7. The method of claim 6, further comprising combining weights with a reduced bit width of the plurality of lightweight convolutional neural networks based on a predefined criterion,
wherein the performing of the neural network computations comprises performing a convolution operation by using a combination of the weights with the reduced bit width of the plurality of lightweight convolutional neural networks.

8. A display device comprising:

a communication interface;
memory storing one or more instructions; and
at least one processor configured to execute the one or more instructions stored in the memory to:

obtain a lightweight convolutional neural network with a reduced bit width of weights; and
input input data to the lightweight convolutional neural network and perform neural network computations to obtain output data, wherein the neural network computations comprise:

determining a shift distance based on a value of input feature data;
performing a shift operation to reduce a bit width of the input feature data based on the shift distance;
performing a convolution operation on the input feature data with the reduced bit width and the weights with the reduced bit width, wherein the convolution operation comprises a shift operation of restoring the bit width; and
obtaining output feature data with the restored bit width.

9. The display device of claim 8, wherein the at least one processor is further configured to execute the one or more instructions to:

obtain an original convolutional neural network; and
generate the lightweight convolutional neural network by reducing a bit width of weights of the original convolutional neural network and store the lightweight convolutional neural network in the memory,
wherein the lightweight convolutional neural network is configured to obtain the lightweight convolutional neural network stored from memory.

10. The display device of claim 8, wherein the weights with the reduced bit width and the input feature data with the reduced bit width comprise information bits representing bits with a bit width reduced from original data and shift bits representing bits including shift distance information.

11. The display device of claim 10, wherein the at least one processor is further configured to execute the one or more instructions to:

identify a first bit width, which is the bit width of the input feature data;
determine a second bit width, which is the bit width of the shift bits;
determine a third bit width, which is the bit width of the information bits; and
determine a shift distance based on values of the first bit width, the second bit width, the third bit width, and the input feature data.

12. The display device of any one of claims 8 to 11, wherein the lightweight convolutional neural network comprises a plurality of neural network layers, and the neural network computations including bit width reduction and restoration respectively correspond to the plurality of neural network layers.

13. The display device of claim 12, wherein the at least one processor is further configured to execute the one or more instructions to perform the neural network computations including the bit width reduction and restoration by using the plurality of lightweight convolutional neural networks.

14. The display device of claim 13, wherein the at least one processor is further configured to execute the one or more instructions to:

combine weights with a reduced bit width of the plurality of lightweight convolutional neural networks based on a predefined criterion; and
perform a convolution operation by using a combination of the weights with the reduced bit width of the plurality of lightweight convolutional neural networks.

15. A computer-readable recording medium having recorded thereon a program for causing a computer to perform the method of any one of claims 1 to 7.

# FIG. 1

FIG. 2

# FIG. 3

WEIGHTS —310
(N×N)

300

(N×N)

LOW-RESOLUTION
IMAGE
110

FEATURE DATA
(M×M)
320

HIGH-RESOLUTION
IMAGE
120

# FIG. 4

# FIG. 5A

# FIG. 6A

```
          610              612
                   ┌─────────────────┐   {Shift Bit(N_D), Info Bit(D)}   ┌─────────────────┐   614
Feature ─────/────▶│ Dynamic Shift   │──────────────────────────────────▶│  FIRST MEMORY   │
                   │ >> Right Shift  │                                    │                 │
                   └─────────────────┘                                    └─────────────────┘

          620              622
                   ┌─────────────────┐   {Shift Bit(N_W), Info Bit(W)}   ┌─────────────────┐   624
Weight ──────/────▶│ Dynamic Shift   │──────────────────────────────────▶│  SECOND MEMORY  │
                   │ >> Right Shift  │                                    │                 │
                   └─────────────────┘                                    └─────────────────┘
```

# FIG. 6B

## FIG. 7A

EP 4 675 501 A1

# FIG. 7B

FIG. 8A

EP 4 675 501 A1

EP 4 675 501 A1

# FIG. 8B

# FIG. 9A

EP 4 675 501 A1

# FIG. 9B

930

940

SHIFT=0
DATA

$0$        $2^7-1$

SHIFT=1
(DATA>>2)

$2^7$        $2^9-1$

SHIFT=1
(DATA>>2)

$-2^9$        $-2^7-1$

SHIFT=0
DATA

$-2^7$        $0$

# FIG. 9C

# FIG. 10

DISPLAY DEVICE  2000

COMMUNICATION INTERFACE  2100

DISPLAY  2200

MEMORY  2300

PROCESSOR  2400

# FIG. 11

DISPLAY DEVICE — 2000

| COMMUNICATION INTERFACE — 2100 | | VIDEO PROCESSING MODULE — 2600 |
| DISPLAY — 2200 | PROCESSOR — 2400 | AUDIO PROCESSING MODULE — 2700 |
| MEMORY — 2300 | | POWER MODULE — 2800 |
| ACCELERATOR — 2500 | | INPUT/OUTPUT INTERFACE — 2900 |

## INTERNATIONAL SEARCH REPORT

| International application No. |
| --- |
| **PCT/KR2024/011094** |

| | |
| --- | --- |
| **A.** | **CLASSIFICATION OF SUBJECT MATTER** |

**G06N 3/0464**(2023.01)i; **G06N 3/045**(2023.01)i; **G06N 3/063**(2006.01)i; **G06T 3/4053**(2024.01)i; **G06T 3/4046**(2024.01)i; **G06F 17/15**(2006.01)i; **G09G 5/391**(2006.01)i; **G09G 5/00**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

G06N 3/0464(2023.01); G06N 3/04(2006.01); G06N 3/06(2006.01); G06N 3/063(2006.01); G06N 3/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 컨볼루션 신경망(convolution neural network), 경량화(lightening), 시프트 (shift), 거리(distance), 가중치(weight), 폭(width), 축소(reducing)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | KR 10-2019-0098671 A (SAMSUNG ELECTRONICS CO., LTD.) 22 August 2019 (2019-08-22)<br>See paragraphs [0052], [0064] and [0079]; and claims 1, 4, 10 and 17. | 1-15 |
| Y | JP 2018-190197 A (PROASSIST K.K. et al.) 29 November 2018 (2018-11-29)<br>See claim 3. | 1-15 |
| A | KR 10-2019-0030034 A (SAMSUNG ELECTRONICS CO., LTD.) 21 March 2019 (2019-03-21)<br>See paragraphs [0065]-[0072]; and figures 9-10. | 1-15 |
| A | KR 10-2020-0043169 A (SAMSUNG ELECTRONICS CO., LTD.) 27 April 2020 (2020-04-27)<br>See paragraphs [0060]-[0105]; and figures 6-13. | 1-15 |
| A | KR 10-2023-0102665 A (KOREA ELECTRONICS TECHNOLOGY INSTITUTE) 07 July 2023 (2023-07-07)<br>See paragraphs [0036]-[0047]; and figures 2-3. | 1-15 |

| | |
| --- | --- |
| ☐ Further documents are listed in the continuation of Box C. | ✓ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 November 2024** | **04 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/011094**

| Patent document cited in search report | | | Publication date (day/month/year) | Patent family member(s) | | | Publication date (day/month/year) |
|---|---|---|---|---|---|---|---|
| KR | 10-2019-0098671 | A | 22 August 2019 | KR | 10-2655950 | B1 | 11 April 2024 |
| JP | 2018-190197 | A | 29 November 2018 | JP | 6999885 | B2 | 19 January 2022 |
| | | | | WO | 2018-207458 | A1 | 15 November 2018 |
| KR | 10-2019-0030034 | A | 21 March 2019 | KR | 10-2606825 | B1 | 27 November 2023 |
| | | | | US | 11803756 | B2 | 31 October 2023 |
| | | | | US | 2019-0080239 | A1 | 14 March 2019 |
| KR | 10-2020-0043169 | A | 27 April 2020 | CN | 111062475 | A | 24 April 2020 |
| | | | | EP | 3640858 | A1 | 22 April 2020 |
| | | | | JP | 2020-064635 | A | 23 April 2020 |
| | | | | JP | 7117280 | B2 | 12 August 2022 |
| | | | | US | 12026611 | B2 | 02 July 2024 |
| | | | | US | 2020-0125947 | A1 | 23 April 2020 |
| KR | 10-2023-0102665 | A | 07 July 2023 | WO | 2023-128024 | A1 | 06 July 2023 |

Form PCT/ISA/210 (patent family annex) (July 2022)